# DEMANDE DE BREVET EUROPEEN

(11) **EP 2 873 560 A2**
(43) Date de publication de la demande: **20.05.2015**
(21) Numéro de dépôt: 14190735.2
(22) Date de dépôt: 28.10.2014
(51) Int. Cl.: B60Q 1/00, H05B 33/08

(54) **Dispositif de pilotage d'une pluralité de blocs lumineux d'un véhicule automobile**

(30) Priorité: 30.10.2013 FR 1360592
(71) Demandeur: VALEO VISION, 93012 Bobigny Cedex (FR)
(72) Inventeur: Roger, Christophe, 49070 Saint-Lambert-La-Potherie (FR)

(57) **Abrégé**

L'invention a pour objet un dispositif de pilotage (P) d'une pluralité de blocs lumineux (LED_DRL/PL, LED_TI) d'un véhicule automobile, le dispositif de pilotage comportant au moins deux entrées (P1,P2), chacune des entrées étant apte à recevoir respectivement un premier et un deuxième signal de commande d'exécution (SCF_DRL, SCF_TI/PL), le dispositif de pilotage étant apte à sélectionner au moins l'un des blocs lumineux en fonction d'au moins un des signaux de commande d'exécution et à délivrer une alimentation électrique audit bloc lumineux sélectionné, le dispositif de pilotage étant caractérisé en ce qu'il comprend au moins un contrôleur (1) recevant lesdits signaux de commande d'exécution, le contrôleur étant apte à délivrer, en fonction de l'état logique desdits signaux de commande d'exécution, un signal de commande de commutation (SCC) de l'alimentation électrique vers le ou les blocs lumineux sélectionnés et un signal de commande du niveau de puissance (SCA) de l'alimentation électrique du ou des blocs lumineux sélectionnés.

## Description

L'invention concerne un dispositif de pilotage d'une pluralité de blocs lumineux d'un véhicule automobile ainsi qu'un dispositif lumineux pour un véhicule automobile incorporant un tel dispositif de pilotage.

Dans les dispositifs de pilotage de blocs lumineux d'un véhicule automobile actuels, la structure de tels circuits comprend, habituellement, un contrôleur muni d'un étage de puissance pour chacun des blocs lumineux implémentant une fonction ou au plus un groupe de deux fonctions lumineuses.

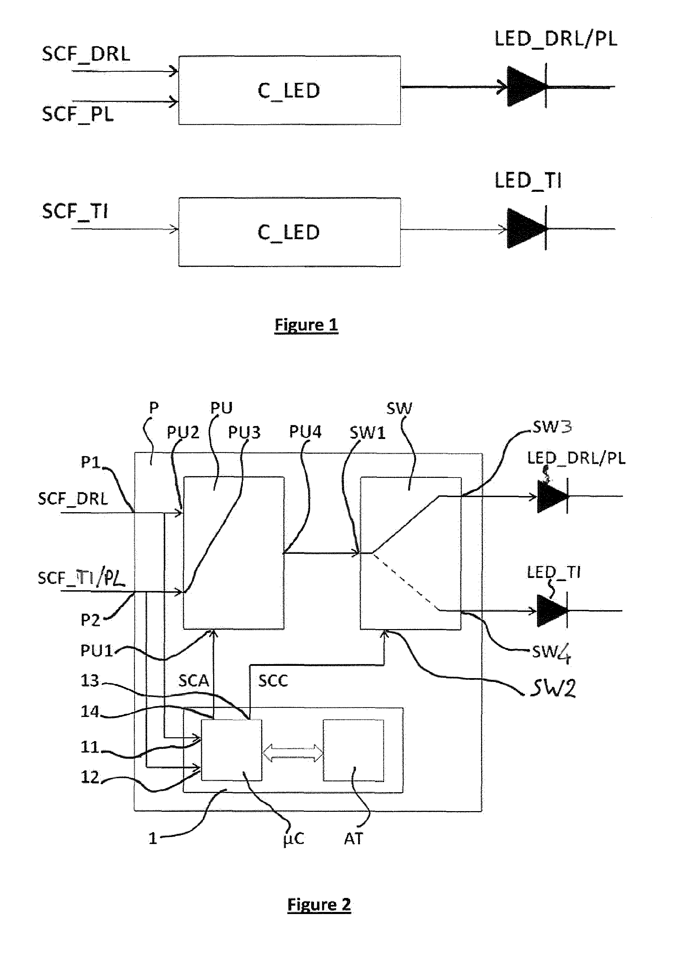

L'architecture d'une telle structure est représentée en figure 1, relative à l'art antérieur, pour les signaux de commande de la fonction lumineuse de feu diurne ou DRL, pour Day Running Light en anglais, groupée avec la fonction lumineuse de feu de position PL pour Parking Light en anglais, ces deux fonctions étant pilotées par un dispositif de pilotage commun commandant un bloc lumineux commun, noté LED_DRL/PL, et pour le signal de commande de la fonction lumineuse d'indicateur de direction TI, pour Turn Indicator en anglais.

Une telle architecture requiert en fait deux dispositifs de pilotage, munis chacun d'un étage de puissance, et trois entrées distinctes, le groupement de la commande des fonctions d'éclairage jour DRL et des feux de position PL nécessitant toutefois des entrées séparées des signaux de commande précités.

Toutefois, une évolution récente de la réglementation relative à la mise en oeuvre des dispositifs d'éclairage et/ou de signalisation de véhicules automobiles autorise le regroupement des signaux de commande des fonctions lumineuses d'un véhicule, lorsque ce regroupement n'obère ni la fiabilité, ni la sécurité d'exécution de l'ensemble.

La présente invention a pour objet la mise en oeuvre d'un dispositif de pilotage et d'un dispositif lumineux pour véhicule automobile, dans lequel un regroupement des signaux de commande des fonctions lumineuses permet de réduire le nombre d'entrées du dispositif de pilotage précité.

Un autre objet de la présente invention est en outre la mise en oeuvre d'un dispositif de pilotage et d'un dispositif lumineux pour véhicule automobile, grâce à l'architecture desquels une unité de puissance unique est mise en oeuvre pour l'ensemble des fonctions lumineuses implémentées.

Un autre objet de la présente invention est également la mise en oeuvre d'un dispositif de pilotage et d'un dispositif lumineux pour véhicule automobile permettant la commande d'un bloc lumineux unique autorisant l'exécution de plusieurs fonctions lumineuses.

Un autre objet de la présente invention est enfin la mise en oeuvre d'un dispositif de pilotage et d'un dispositif lumineux pour véhicule automobile permettant de simplifier de manière significative la complexité et l'encombrement du câblage des fonctions lumineuses des véhicules automobiles et de réduire les coûts d'équipement de ces derniers.

La présente invention a ainsi pour objet un dispositif de pilotage d'une pluralité de blocs lumineux d'un véhicule automobile, le dispositif de pilotage comportant au moins deux entrées, chacune des entrées étant apte à recevoir respectivement un premier et un deuxième signal de commande d'exécution, le dispositif de pilotage étant apte à sélectionner au moins l'un des blocs lumineux en fonction d'au moins un des signaux de commande d'exécution et à délivrer une alimentation électrique audit bloc lumineux sélectionné, le dispositif de pilotage étant caractérisé en ce qu'il comprend au moins un contrôleur recevant lesdits signaux de commande d'exécution, le contrôleur étant apte à délivrer, en fonction de l'état logique desdits signaux de commande d'exécution, un signal de commande de commutation de l'alimentation électrique vers le ou les blocs lumineux sélectionnés et un signal de commande du niveau de puissance de l'alimentation électrique du ou des blocs lumineux sélectionnés.

Dans un mode de réalisation avantageux de l'invention, chaque signal de commande d'exécution reçu par le dispositif de pilotage constitue également une alimentation électrique, le dispositif de pilotage convertissant ces signaux d'exécution en l'alimentation électrique devant être commutée par le contrôleur vers le ou les blocs lumineux sélectionnés.

Avantageusement, le dispositif de pilotage est apte à sélectionner une fonction lumineuse à exécuter en fonction d'une combinaison des états logiques des signaux de commande d'exécution reçus sur les entrées du dispositif, et à sélectionner au moins l'un des blocs lumineux pour l'exécution de ladite fonction lumineuse sélectionnée.

Par fonction lumineuse, on entend une partie, voire la totalité d'une fonction photométrique réglementaire prédéterminée.

Dans un mode de réalisation de l'invention, le dispositif de pilotage est apte à sélectionner une fonction lumineuse parmi un nombre prédéterminé de fonctions lumineuses sélectionnables, le nombre d'entrées de signaux de commande d'exécution du dispositif est inférieur audit nombre prédéterminé de fonctions lumineuses sélectionnables.

Le cas échéant, chaque bloc lumineux piloté par le dispositif de pilotage est apte à réaliser un nombre de fonctions lumineuse strictement inférieur au nombre prédéterminé de fonctions lumineuses sélectionnables.

De préférence, le dispositif de pilotage est apte à sélectionner au moins deux fonctions lumineuses distinctes pour un même signal de commande d'exécution prédéterminé reçu sur l'une des entrée de signaux de commande d'exécution du dispositif.

Si on le souhaite, le dispositif peut être apte à sélectionner une fonction lumineuse à exécuter en fonction d'une table d'activation recevant en entrée l'état logique de chacun des signaux de commande d'exécution et délivrant ladite fonction lumineuse à sélectionner.

Le cas échéant, ladite table d'activation est implémentée par une table de consultation dans le contrôleur ou par un microprogramme piloté par le contrôleur. En variante, ladite table d'activation peut être réalisée sous la forme d'un circuit logique.

Par exemple, les premier et deuxième signaux de commande d'exécution peuvent chacun occuper un état « ON » ou un état « OFF ».

Avantageusement, le dispositif de pilotage sélectionne une première fonction lumineuse lorsque les premier et deuxième signaux de commande d'exécution occupent chacun un état « ON ».

Le dispositif de pilotage peut également sélectionner une deuxième fonction lumineuse lorsque le premier signal de commande d'exécution occupe un état « ON » et lorsque le deuxième signal de commande d'exécution occupe un état « OFF ».

Le dispositif de pilotage peut encore sélectionner une troisième fonction lumineuse lorsque le premier signal de commande d'exécution occupe un état « OFF » et lorsque le deuxième signal de commande d'exécution occupe un état « ON ».

Avantageusement, le contrôleur est apte à délivrer le signal de commande de commutation de l'alimentation électrique vers le ou les blocs lumineux sélectionnés pour l'exécution de ladite fonction lumineuse sélectionnée.

Le cas échéant, le contrôleur est apte à délivrer le signal de commande de commutation sous la forme d'une pluralité de sous-signaux de commande de commutation, ladite pluralité de sous-signaux comportant autant de sous-signaux que de blocs lumineux pilotables par le dispositif de pilotage, chaque sous-signal commandant la commutation de l'alimentation électrique d'un unique bloc lumineux et la commutation de l'alimentation électrique d'un bloc lumineux étant uniquement commandé par un seul sous-signal. Dans ce cas, lorsque le dispositif de pilotage sélectionne une fonction lumineuse, le contrôleur délivre une pluralité de sous-signaux de commande. Au moins un sous-signal de cette pluralité commande la commutation de l'alimentation électrique vers le bloc lumineux apte à exécuter ladite fonction lumineuse sélectionnée tandis que le ou les autres sous-signaux empêchent la commutation de l'alimentation électrique vers le ou les autres blocs lumineux.

Avantageusement encore, le contrôleur est apte à délivrer le signal de commande du niveau de puissance pour l'exécution de ladite fonction lumineuse sélectionnée.

Par exemple, le signal de commande du niveau de puissance peut commander une modulation de largeur d'impulsion de l'alimentation électrique adaptée pour l'exécution de la fonction lumineuse sélectionnée.

Selon un autre exemple, ledit signal de commande du niveau de puissance peut également commander le niveau d'amplitude de l'alimentation électrique adaptée pour l'exécution de la fonction lumineuse sélectionnée.

Dans un mode de réalisation de l'invention, le contrôleur comporte une première entrée pour la réception du premier signal de commande d'exécution, une deuxième entrée pour la réception du deuxième signal de commande d'exécution.

Le cas échéant, le contrôleur peut comporter une première sortie pour la délivrance du signal de commande du niveau de puissance et au moins une deuxième sortie pour la délivrance du signal de commande de commutation.

Avantageusement, le dispositif de pilotage comporte un module de puissance comportant une sortie, le module de puissance étant apte à délivrer l'alimentation électrique sur sa sortie en fonction du signal de commande du niveau de puissance. L'alimentation électrique peut donc être modulé en largeur d'impulsion selon un rapport cyclique déterminé selon le signal de commande du niveau de puissance et/ou présenter un niveau d'amplitude déterminé selon le signal de commande du niveau de puissance de façon à ce que sa puissance soit adaptée à l'exécution de la fonction lumineuse sélectionnée et en particulier à la puissance lumineuse nécessaire pour l'exécution de cette fonction lumineuse sélectionnée par le ou les blocs lumineux sélectionnés de façon à remplir les exigences réglementaires appliquées à cette fonction lumineuse.

Le cas échéant, le module de puissance comporte une première entrée connectée à la première sortie du contrôleur pour recevoir le signal de commande du niveau de puissance délivré par le contrôleur.

De préférence, le dispositif de pilotage comporte un commutateur comportant une première entrée connecté à la sortie du module de puissance pour recevoir l'alimentation électrique, le commutateur étant agencé pour commuter l'alimentation électrique vers le ou les blocs lumineux sélectionnés.

Le cas échéant, le commutateur comporte au moins une deuxième entrée connectée à la deuxième sortie du contrôleur pour recevoir le signal de commande de commutation délivré par le contrôleur.

L'invention a également pour objet un dispositif lumineux, notamment d'éclairage et/ou de signalisation, pour un véhicule automobile comportant une pluralité de modules lumineux, caractérisé en ce qu'il comporte un dispositif de pilotage de la pluralité de modules lumineux selon l'invention.

Le cas échéant, chaque bloc lumineux est apte à réaliser un nombre de fonctions lumineuse strictement inférieur au nombre prédéterminé de fonctions lumineuses réalisables par le dispositif lumineux.

Avantageusement, le dispositif lumineux comporte un premier bloc lumineux apte à exécuter sélectivement une première et une deuxième fonction lumineuse et un deuxième bloc lumineux apte à exécuter une troisième fonction lumineuse.

De préférence, la première fonction lumineuse est un feu de position, la deuxième fonction lumineuse est un feu diurne et la troisième fonction lumineuse est un indicateur de direction.

Avantageusement, chaque bloc lumineux de la pluralité de blocs lumineux comporte au moins une LED pour exécuter la ou les fonctions lumineuses exécutables par ce bloc.

Le dispositif de pilotage et le dispositif lumineux pour un véhicule automobile, objets de l'invention, trouvent application à l'équipement de véhicules automobiles de tout type.

Ils seront mieux compris à la lecture de la description et à l'observation des dessins ci-après, dans lesquels, outre la figure 1 relatif à l'art antérieur :
- la figure 2 représente, à titre purement illustratif, le schéma synoptique fonctionnel d'un dispositif de pilotage d'une pluralité de blocs lumineux d'un véhicule automobile conforme à l'invention ;
- la figure 3 représente, à titre purement illustratif, un schéma détaillé de mise en oeuvre du dispositif de pilotage tel représenté en figure 2 ; et
- la figure 4 représente, à titre illustratif, le tableau d'une table d'activation permettant la mise en oeuvre du dispositif de pilotage de la figure 2, dans le cadre de l'exemple non limitatif de la commutation des feux de jour DRL, de la fonction des feux de changement de direction TI et de la fonction des feux de position PL d'un véhicule automobile.

Une description plus détaillée d'un contrôleur d'un dispositif de pilotage d'une pluralité de blocs lumineux d'un véhicule automobile selon l'invention est maintenant donnée en liaison avec la figure 2.

On a représenté en figure 2 un dispositif de pilotage P de deux blocs lumineux LED_DRL/PL et LED_TI d'un véhicule automobile.

Le bloc lumineux LED_DRL/PL est apte à exécuter sélectivement une première fonction de type feu de position PL et une deuxième fonction lumineuse de type feu diurne DRL. Le bloc lumineux LED_TI est apte à exécuter une troisième fonction lumineuse de type indicateur de direction TI.

Le dispositif de pilotage P comportant deux entrées P1 et P2. Chacune des entrées P1 et P2 est apte à recevoir respectivement une première et une deuxième alimentation électrique SCF_DRL et SCF_TI/PL. Ces première et deuxième alimentations électriques constituent respectivement des premier et deuxième signaux de commande d'exécution SCF_DRL et SCF_TI//PL pouvant chacun occuper un état « ON » ou un état « OFF ».

Le dispositif de pilotage P comprend au moins un contrôleur 1. Le contrôleur 1 comporte une première entrée 11 pour la réception du premier signal de commande d'exécution SCF_DRL et une deuxième entrée 12 pour la réception du deuxième signal de commande d'exécution SCF_TI.

Le contrôleur 1 est apte à sélectionner une fonction lumineuse parmi les fonctions TI, PL et DRL à exécuter en fonction d'une combinaison des états logiques des signaux de commande d'exécution SCF_DRL et SCF_TI/PL de façon à ce que le dispositif de pilotage puisse sélectionner le bloc lumineux parmi les blocs LED_DRL/PL et LED_TI de façon à délivrer une alimentation électrique à ce bloc sélectionné pour l'exécution de ladite fonction lumineuse sélectionnée. On constate par ailleurs que le nombre d'entrées de signaux de commande d'exécution du dispositif est inférieur au nombre de fonctions lumineuses réalisables par les blocs lumineux LED_DRL/PL et LED_TI.

A cet effet, le contrôleur 1 comporte une table d'activation implémentée sous la forme d'une table de consultation AT et un microcontrôleur µC lisant cette table de consultation. En variante, la table d'activation pourrait être implémentée sous la forme d'un microprogramme directement piloté par le microcontrôleur µC.

La table d'activation AT reçoit en entrée l'état logique de chacun des signaux de commande d'exécution SCF_DRL et SCF_TI/PL et délivre en sortie la fonction lumineuse à exécuter.

La table d'activation AT sélectionne :
- la première fonction lumineuse PL lorsque les premier et deuxième signaux de commande d'exécution SCF_DRL et SCF_TI/PL occupent chacun un état « ON » ;
- la deuxième fonction lumineuse DRL lorsque le premier signal de commande d'exécution SCF_DRL occupe un état « ON » et lorsque le deuxième signal de commande d'exécution SCF_TI/PL occupe un état « OFF » ; et
- la troisième fonction lumineuse TI lorsque le premier signal de commande d'exécution SCF_DRL occupe un état « OFF » et lorsque le deuxième signal de commande d'exécution SCF_TI/PL occupe un état « ON ».

De cette façon, la table d'activation AT est apte à sélectionner deux fonctions lumineuses distinctes DRL ou PL pour un même état logique du signal de commande d'exécution SCF_DRL reçu sur l'entrée P1 du dispositif P.

Le microcontrôleur µC délivre, en fonction de la fonction lumineuse sélectionnée, un signal de commande de commutation de l'alimentation électrique SCC vers le bloc lumineux sélectionné et un signal de commande du niveau de puissance de l'alimentation électrique SCA du bloc lumineux sélectionné de façon à ce que ledit bloc lumineux sélectionné exécute ladite fonction lumineuse sélectionnée.

Le contrôleur 1 comporte une première sortie 14 pour la délivrance du signal de commande du niveau de puissance SCA et une deuxième sortie 13 pour la délivrance du signal de commande de commutation SCC.

Le dispositif de pilotage P comporte un module de puissance PU comportant des première, deuxième et troisième entrées PU1, PU2 et PU3 et une sortie PU4. La première entrée PU1 du module de puissance PU est connectée à la première sortie 14 du contrôleur 1 pour recevoir le signal de commande du niveau de puissance SCA délivré par le contrôleur 1. Les deuxième et troisième entrées PU2 et PU3 reçoivent respectivement les premier et deuxième signaux de commande d'exécution SCF_DRL et SCF_TI/PL.

Le module de puissance PU convertit les signaux de commande d'exécution SCF_DRL et SCF_TI/PL en une alimentation électrique en fonction du signal de commande du niveau de puissance SCA et délivre cette alimentation sur sa sortie PU4. Par exemple, le signal de commande du niveau de puissance SCA peut commander une modulation de largeur d'impulsion de l'alimentation électrique et/ou le niveau d'amplitude de l'alimentation électrique de façon à ce que la puissance de l'alimentation électrique soit adaptée pour l'exécution de la fonction lumineuse sélectionnée. Ainsi, le module de puissance PU délivre sur sa sortie PU4 une alimentation électrique modulée en largeur d'impulsion selon un rapport cyclique déterminé selon le signal de commande du niveau de puissance SCA et/ou présentant un niveau d'amplitude déterminé selon le signal de commande du niveau de puissance SCA de façon à ce que sa puissance soit adaptée à l'exécution de la fonction lumineuse sélectionnée et en particulier à la puissance lumineuse nécessaire pour l'exécution de cette fonction lumineuse de façon à remplir les exigences réglementaires appliquées à cette fonction lumineuse.

Le dispositif de pilotage P comporte par ailleurs un commutateur SW comportant une première entrée SW1 connecté à la sortie PU4 du module de puissance PU pour recevoir l'alimentation électrique et une deuxième entrée connectée à la deuxième sortie 13 du contrôleur 1 pour recevoir le signal de commande de commutation SCC délivré par le contrôleur 1.

En fonction du signal de commande de commutation SCC délivré par le contrôleur 1, le commutateur SW commute l'alimentation électrique vers le bloc lumineux sélectionné pour l'exécution de la fonction lumineuse sélectionné.

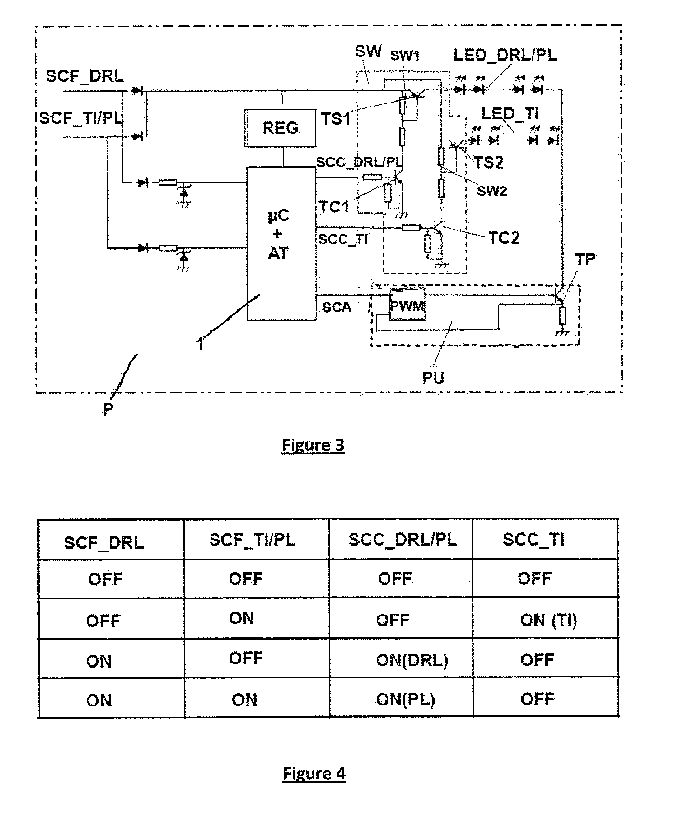

Le schéma fonctionnel du dispositif de pilotage selon l'invention tel que représenté en figure 2 peut avantageusement être mis en oeuvre dans un mode d'exécution non limitatif tel que décrit en liaison avec la figure 3 de la manière ci-après.

Ainsi que représenté sur la figure 3, le dispositif de pilotage P comprend le contrôleur 1 précité, constitué par un microcontrôleur µC auquel est associée la table d'activation AT. Le contrôleur 1 reçoit les signaux de commande d'exécution SCF_DRL et SCF_TI/PL et comporte un régulateur de tension REG à 5 volts permettant son alimentation.

Le contrôleur 1 délivre le signal de commande de commutation SCC sous la forme de deux sous-signaux de commande de commutation SCC_DRL/PL et SCC_TI.

Le commutateur SW comporte un premier circuit de commutation SW1 vers le bloc lumineux LED_DRL/PL et un deuxième circuit de commutation SW2 vers le bloc lumineux LED_TI. Chacun des circuits de commutation précité est constitué par un interrupteur à transistor commandé TS1,TS2 par un transistor de commande TC1,TC2 recevant chacun l'un des sous- signaux de commande de commutation SCC_DRL/PL respectivement SCC_TI. L'électrode d'émetteur du transistor TS1,TS2 constituant l'interrupteur à transistor correspondant est directement reliée au bloc lumineux correspondant LED_DRL/PL respectivement LED_TI. L'électrode de collecteur du transistor TS1, TS2 constituant l'interrupteur à transistor est elle-même reliée à la sortie du régulateur de tension REG.

On comprend donc que le sous-signal SCC_DRL/PL commande la commutation de l'alimentation électrique uniquement vers le bloc lumineux LED_DRL/PL tandis que le sous-signal SCC_TI commande la commutation de l'alimentation électrique uniquement vers le bloc lumineux LED_TI. Dans ce cas, lorsque le contrôleur 1 sélectionne une fonction lumineuse, l'un des sous-signaux SCC_DRL/PL, SCC_TI commande la commutation de l'alimentation électrique vers le bloc lumineux apte à exécuter ladite fonction lumineuse sélectionnée tandis que l'autre sous-signal empêche la commutation de l'alimentation électrique vers l'autre bloc lumineux.

Enfin, le module de puissance PU comprend un interrupteur à transistor de puissance TP commandé par un circuit de commande de modulation par impulsions PWM. Le collecteur du transistor de puissance TP est directement relié à une borne commune des blocs lumineux correspondant LED_DRL/PL et LED_TI et un circuit de contre réaction à partir d'une résistance connectée dans l'émetteur du transistor de puissance TP précité permet de piloter le circuit de commande de modulation par impulsions PWM.

Le circuit de commande de modulation par impulsions PWM reçoit le signal de commande du niveau de puissance, SCA.

On comprend ainsi que le transistor de puissance de modulation TP permet, à partir du signal de commande d'amplitude du signal d'alimentation précité délivré par le contrôleur 1, de moduler en conséquence par impulsions le signal d'alimentation des blocs d'éclairage/signalisation LED_DRL/PL ou LED_TI, pour l'exécution de la fonction d'éclairage/signalisation sélectionnée par le bloc d'éclairage/signalisation correspondant.

Enfin, on a représenté en figure 4, sous forme de tableau, la table de vérité de la combinaison logique des états logiques des signaux de commande d'exécution dans l'exemple d'application de la figure 3.

Les deux premières colonnes de gauche donnent la valeur logique du signal de commande d'exécution SCF_DRL respectivement du signal de commande d'exécution SCF_TI/PL, et les deux dernières colonnes de droite, la valeur logique du sous-signal de commande de commutation SCC_DRL/PL, respectivement du sous-signal de commande de commutation SCC_TI.

Ainsi, les règles de combinaison logique établissant les valeurs en sortie de la table de consultation s'énoncent de la manière ci-après :
- lorsque le signal de commande d'exécution SCF_DRL est à l'état logique OFF et lorsque le signal de commande d'exécution SCF_TI/PL est à l'état logique OFF, le sous-signal de commande de commutation SCC_DRL/PL est à l'état logique OFF et le sous-signal de commande de commutation SCC_TI est à l'état OFF ;
- lorsque le signal de commande d'exécution SCF_DRL est à l'état logique OFF et lorsque le signal de commande d'exécution SCF_TI/PL est à l'état logique ON, le sous-signal de commande de commutation SCC_DRL/PL est à l'état logique OFF et le sous-signal de commande de commutation SCC_TI est à l'état ON ;
- lorsque le signal de commande d'exécution SCF_DRL est à l'état logique ON et lorsque le signal de commande d'exécution SCF_TI/PL est à l'état logique OFF, le sous-signal de commande de commutation SCC_DRL/PL est à l'état logique ON et le sous-signal de commande de commutation SCC_TI est à l'état OFF ; et
- lorsque le signal de commande d'exécution SCF_DRL est à l'état logique ON et lorsque le signal de commande d'exécution SCF_TI/PL est à l'état logique ON, le sous-signal de commande de commutation SCC_DRL/PL est à l'état logique ON et le sous-signal de commande de commutation SCC_TI est à l'état ON.

On comprend ainsi, que, d'une part, chacun des sous-signaux de commande de commutation SCC_DRL/PL et SCC_TI permet d'assurer la commutation de l'alimentation électrique vers les blocs d'éclairage signalisation LED_DRL/PL respectivement LED_TI, et que, d'autre part, le signal de commande SCA, délivré conjointement et en correspondance du signal de commutation précité, permet d'acheminer le niveau de puissance d'alimentation pour l'exécution de la fonction lumineuse sélectionnée.

## Revendications

1. Dispositif de pilotage (P) d'une pluralité de blocs lumineux (LED_DRL/PL, LED_TI) d'un véhicule automobile, le dispositif de pilotage comportant au moins deux entrées (P1,P2), chacune des entrées étant apte à recevoir respectivement un premier et un deuxième signal de commande d'exécution (SCF_DRL, SCF_TI/PL), le dispositif de pilotage étant apte à sélectionner au moins l'un des blocs lumineux en fonction d'au moins un des signaux de commande d'exécution et à délivrer une alimentation électrique audit bloc lumineux sélectionné, le dispositif de pilotage étant **caractérisé en ce qu'**il comprend au moins un contrôleur (1) recevant lesdits signaux de commande d'exécution, le contrôleur étant apte à délivrer, en fonction de l'état logique desdits signaux de commande d'exécution, un signal de commande de commutation (SCC) de l'alimentation électrique vers le ou les blocs lumineux sélectionnés et un signal de commande du niveau de puissance (SCA) de l'alimentation électrique du ou des blocs lumineux sélectionnés.

2. Dispositif de pilotage (P) selon la revendication précédente, **caractérisé en ce qu'**il est apte à sélectionner une fonction lumineuse à exécuter en fonction d'une combinaison des états logiques des signaux de commande d'exécution (SCF_DRL, SCF_TI/PL) reçus sur les entrées (P1, P2)du dispositif, et à sélectionner au moins l'un des blocs lumineux (LED_DRL/PL, LED_TI) pour l'exécution de ladite fonction lumineuse sélectionnée.

3. Dispositif de pilotage (P) selon la revendication précédente, **caractérisé en ce qu'**il est apte à sélectionner une fonction lumineuse parmi un nombre prédéterminé de fonctions lumineuses sélectionnables, le nombre d'entrées (P1, P2) de signaux de commande d'exécution (SCF_DRL, SCF_TI/PL) du dispositif de pilotage étant inférieur audit nombre prédéterminé de fonctions lumineuse sélectionnables.

4. Dispositif de pilotage (P) selon l'une des revendications 2 à 3, **caractérisé en ce qu'**il est apte à sélectionner une fonction lumineuse à exécuter en fonction d'une table d'activation (AT) recevant en entrée l'état logique de chacun des signaux de commande d'exécution (SCF_DRL, SCF_TI/PL) et délivrant ladite fonction lumineuse à sélectionner.

5. Dispositif de pilotage (P) selon la revendication 4, **caractérisé en ce que** ladite table d'activation (AT) est implémentée par une table de consultation (AT) dans le contrôleur (1) ou par un microprogramme piloté par le contrôleur.

6. Dispositif de pilotage (P) selon l'une des revendications 2 à 5, **caractérisé en ce que** le contrôleur (1) est apte à délivrer le signal de commande de commutation (SCC) de l'alimentation électrique vers le ou les blocs lumineux sélectionnés pour l'exécution de ladite fonction lumineuse sélectionnée.

7. Dispositif de pilotage (P) selon l'une des revendications 2 à 6, **caractérisée en ce que** le contrôleur (1) est apte à délivrer le signal de commande du niveau de puissance (SCA) pour l'exécution de ladite fonction lumineuse sélectionnée.

8. Dispositif de pilotage (P) selon la revendication 7, **caractérisé en ce que** le signal de commande du niveau de puissance (SCA) commande une modulation de largeur d'impulsion de l'alimentation électrique adaptée pour l'exécution de la fonction lumineuse sélectionnée.

9. Dispositif de pilotage (P) selon l'une des revendications 7 à 8, **caractérisé en ce que** ledit signal de commande du niveau de puissance (SCA) commande le niveau d'amplitude de l'alimentation électrique adaptée pour l'exécution de la fonction lumineuse sélectionnée.

10. Dispositif de pilotage (P) selon l'une des revendications 1 à 9, **caractérisé en ce que** le contrôleur (1) comporte une première entrée (11) pour la réception du premier signal de commande d'exécution (SCF_DRL) et une deuxième entrée (12) pour la réception du deuxième signal de commande d'exécution (SCF_TI/PL).

11. Dispositif de pilotage (P) selon la revendication précédente, **caractérisé en ce que** le contrôleur (1) comporte une première sortie (14) pour la délivrance du signal de commande du niveau de puissance (SCA) et au moins une deuxième sortie (13) pour la délivrance du signal de commande de commutation (SCC).

12. Dispositif de pilotage (P) selon l'une des revendications précédentes, **caractérisé en ce qu'**il comporte un module de puissance (PU) comportant une sortie (PU4), le module de puissance étant apte à délivrer l'alimentation électrique sur sa sortie en fonction du signal de commande du niveau de puissance (SCA).

13. Dispositif de pilotage (P) selon la revendication précédente, **caractérisé en ce que** le module de puissance (PU) comporte une première entrée (PU1) connectée à la première sortie (14) du contrôleur (1) pour recevoir le signal de commande du niveau de puissance (SCA) délivré par le contrôleur.

14. Dispositif de pilotage (P) selon l'une des revendications précédentes, **caractérisé en ce qu'**il comporte un commutateur (SW) comportant une première entrée (SW1) connecté à la sortie (PU4) du module de puissance (PU) pour recevoir l'alimentation électrique, le commutateur étant agencé pour commuter l'alimentation électrique vers le ou les blocs lumineux sélectionnés.

15. Dispositif de pilotage (P) selon la revendication précédente, **caractérisé en ce que** le commutateur (SW) comporte au moins une deuxième entrée (SW2) connecté à la deuxième sortie (13) du contrôleur (1) pour recevoir le signal de commande de commutation (SCC) délivré par le contrôleur.

16. Dispositif lumineux, notamment d'éclairage et/ou de signalisation, pour un véhicule automobile comportant une pluralité de modules lumineux (LED_DRL/PL, LED_TI), **caractérisé en ce qu'**il comporte un dispositif de pilotage (P) de la pluralité de modules lumineux selon l'une des revendications précédentes.

17. Dispositif lumineux selon la revendication précédente, **caractérisé en ce qu'**il comporte un premier bloc lumineux (LED_DRL/PL) apte à exécuter sélectivement une première et une deuxième fonction lumineuse et un deuxième bloc lumineux (LED_TI) apte à exécuter une troisième fonction lumineuse.

18. Dispositif selon la revendication précédente, **caractérisé en ce que** la première fonction lumineuse est un feu diurne, la deuxième fonction lumineuse est un feu de position et la troisième fonction lumineuse est un indicateur de direction.
